# FASCICULE DE BREVET EUROPEEN

(11) **EP 1 452 003 B1**
(45) Date de publication et mention de la délivrance du brevet: **02.11.2016**
(21) Numéro de dépôt: 02796889.0
(22) Date de dépôt: 02.12.2002
(51) Int. Cl.: H04W 36/12

(54) **PROCEDE DE GESTION D'UNE COMMUNICATION AVEC DES MOYENS DE FOURNITURE D'UN SERVICE A SERVEURS MULTIPLES**
VERFAHREN ZUR VERWALTUNG EINER ÜBERTRAGUNG MIT MITTELN ZUR BEREITSTELLUNG EINES DIENSTES MIT MEHREREN SERVERN
METHOD FOR MANAGING A COMMUNICATION WITH MULTI-SERVER SERVICE PROVIDING MEANS

(30) Priorité: 03.12.2001 FR 0115605
(43) Date de publication de la demande: 01.09.2004
(73) Titulaire: Orange, 75015 Paris (FR)
(72) Inventeur: CHARLES, Olivier, F-75014 Paris (FR); COMBES, Jean-Michel, 92130 Issy-Les-Moulineaux (FR)
(74) Mandataire: Regimbeau
(86) Numéro de dépôt international: PCT/FR2002/004132
(87) Numéro de publication internationale: WO 2003/049406

(56) Documents cités:
- EP-A- 0 865 180
- WO-A-01/19053
- WO-A-97/48246
- US-A- 5 742 598

## Description

La présente invention concerne un procédé de gestion d'une communication à travers un réseau de télécommunications comportant des points de connexion, entre un terminal d'accès connecté au réseau et des moyens de fourniture d'un service à travers le réseau, ces moyens comportant d'une part une multiplicité de terminaux connectés au réseau, ces terminaux formant serveurs adaptés pour fournir le service, et d'autre part des moyens de sélection, parmi cette multiplicité de serveurs, du serveur le mieux adapté pour fournir le service au terminal d'accès. La communication est établie selon un protocole de communications qui permet la mobilité de certains terminaux par l'attribution à chacun de ceux-ci d'une adresse principale invariable quel que soit son point de connexion au réseau et par la transmission de toutes données émises à destination de cette adresse principale vers le terminal correspondant.

Le document US-A-5,742,598 divulgue un procédé de gestion d'une communication a travers un réseau de télécommunications comportant des points de connexion entre un terminal d'accès connecté au réseau et des moyens de fourniture d'un service a travers le réseau, ces moyens comportant d'une part une multiplicité de terminaux formant serveurs adaptés pour fournir le service, et, d'autre part, des moyens de sélection, parmi cette multiplicité de serveurs, du serveur le mieux adapté pour fournir le service au terminal d'accès.

Un tel procédé est mis en oeuvre par exemple lorsque l'on souhaite proposer un service susceptible d'être sollicité simultanément par un grand nombre d'utilisateurs. C'est notamment le cas si le service est proposé sur un site Web à travers un réseau de télécommunications tel qu'Internet. Pour faciliter l'accès à ce service, le fournisseur de services dispose d'une multiplicité de terminaux formant serveurs, connectés au réseau Internet et dispersés géographiquement.

Le service proposé est par exemple un service de résolution de noms, de chiffrement de données ou d'impression de documents.

Cependant, lorsqu'un utilisateur souhaite entrer en communication avec l'un des ces serveurs pour accéder au service, la communication est interceptée par un répartiteur de charges constitué d'un terminal dont la fonction est de sélectionner, parmi la multiplicité de serveurs, le serveur le mieux adapté pour fournir le service à l'utilisateur. En général, le serveur le mieux adapté est sélectionné selon des critères de proximité ou d'encombrement. Ensuite, le répartiteur de charges redirige la communication vers le serveur sélectionné.

Les protocoles de communications connus permettent d'assurer l'intégrité et la sécurité de communications entre un émetteur et un récepteur identifiés, même si l'un des deux est un terminal mobile et change de point de connexion au réseau en cours de communication. Par contre l'intégrité et la sécurité ne sont pas assurées lorsque le récepteur final, qui est ici le serveur sélectionné, n'est pas identifié dès l'établissement de la communication.

Ainsi, l'intégrité et la sécurité des échanges d'informations avec des moyens de fourniture d'un service comportant une multiplicité de serveurs ne sont pas assurées, puisque toute communication avec l'un de ces serveurs passe d'abord par une communication avec le répartiteur de charges.

L'invention est définie dans les revendications indépendantes 1 et 11.

L'invention vise à remédier aux inconvénients des procédés existants en fournissant un procédé de gestion d'une communication permettant d'assurer la sécurité et l'intégrité des échanges d'informations entre un terminal d'accès et un serveur choisi parmi une multiplicité de serveurs adaptés pour fournir le service demandé.

L'invention a donc pour objet un procédé de gestion d'une communication du type précité, caractérisé en ce que l'on attribue aux moyens de fourniture du service une adresse principale commune, et en ce que l'on transmet toutes données émises à destination de l'adresse principale, vers le serveur sélectionné comme étant le mieux adapté pour fournir ledit service.

Ainsi, quel que soit le serveur sélectionné pour l'accès au service, la communication est établie entre le terminal d'accès et un serveur virtuel invariable identifié par l'adresse principale. L'émetteur et le récepteur sont donc clairement identifiés dès l'établissement de la communication et pendant toute la durée de celle-ci. Les protocoles de communications classiques, tels que "Mobile IPv6" permettent de mettre en oeuvre des mécanismes assurant la sécurité et l'intégrité des échanges d'informations lors d'une telle communication. Un tel mécanisme est par exemple le protocole « IPsec ».

Le procédé de gestion d'une communication selon l'invention peut en outre comporter l'une ou plusieurs des caractéristiques suivantes :
- attribuant en outre à chaque terminal mobile, selon le protocole de communications, une adresse temporaire localisant à chaque instant son point de connexion au réseau, on attribue également aux moyens de fourniture du service une adresse temporaire correspondant à chaque instant à l'adresse principale du serveur sélectionné comme étant le mieux adapté pour fournir ledit service, lors de la communication ;
- les moyens de sélection sélectionnent le serveur le mieux adapté pour fournir ledit service dès qu'ils sont sollicités par un événement déclenchant ;
- l'établissement de la communication entre le terminal d'accès et les moyens de fourniture du service est un événement déclenchant ;
- le terminal d'accès est un terminal d'accès mobile, et le déplacement du terminal d'accès mobile d'un premier point de connexion à un second point de connexion du réseau de télécommunications pendant la communication est un événement déclenchant ; et
- le serveur le mieux adapté pour fournir ledit service est le serveur le plus proche du terminal d'accès.

L'invention sera mieux comprise à l'aide de la description qui va suivre, donnée uniquement à titre d'exemple et faite en se référant aux dessins annexés, sur lesquels :
- la figure 1 représente schématiquement la structure général e d'un système de mise en oeuvre d'un procédé de gestion d'une communication selon l'invention ;
- la figure 2 représente une succession d'étapes d'établissement d'une communication selon le procédé mis en oeuvre dans la figure 1 ; et
- la figure 3 représente une succession d'étapes de gestion d'une communication en cours, selon le procédé mis en oeuvre dans la figure 1.

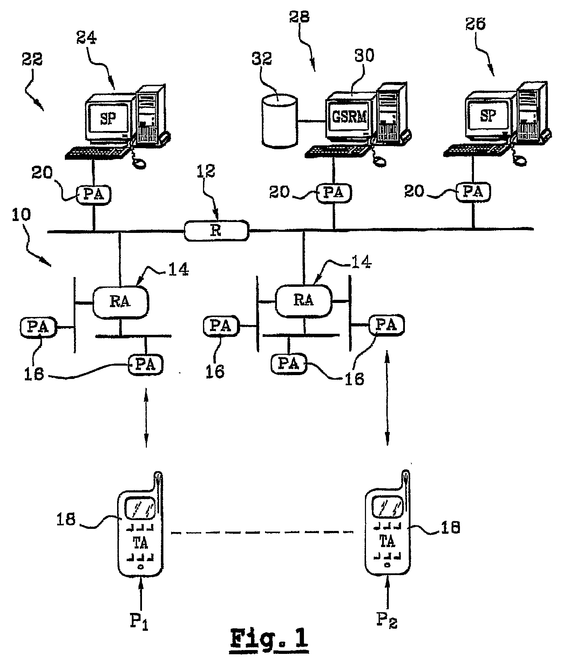

Le système représenté à la figure 1 comporte un réseau de télécommunications 10, tel que le réseau Internet. Ce réseau comporte de façon classique des routeurs, tels que le routeur 12, permettant l'interconnexion de réseaux locaux. Il comporte en outre des routeurs d'accès, tels que les routeurs 14, qui permettent le raccordement de points de connexion au réseau Internet 10.

Certains des points de connexion au réseau, tels que les points de connexion 16, sont par exemple des antennes émettrices/réceptrices permettant à des terminaux d'accès mobiles, tels qu'un terminal mobile 18, d'accéder au réseau Internet 10 par ondes radio et conformément au standard IEEE 802.11 par exemple. D'autres points de connexion, tels que les points de connexion filaires 20, permettent à des terminaux, tels que des micro-ordinateurs, de se connecter au réseau Internet 10.

Le système comporte en outre des moyens 22 de fourniture d'un service à travers le réseau Internet 10.

Ces moyens comportent plusieurs terminaux 24, 26 dont deux sont représentés sur la figure. Ils sont connectés au réseau Internet 10 par l'intermédiaire de points de connexion filaires 20, et constituent des serveurs adaptés pour fournir le service.

De plus, les moyens 22 de fourniture du service comportent des moyens de sélection 28, également connectés au réseau Internet 10 par l'intermédiaire d'un point de connexion filaire 20. Ces moyens de sélection 28 comportent un serveur de gestion de communications 30 entre le terminal mobile 18 et les moyens 22 de fourniture du service, ainsi que des moyens de stockage 32 pour stocker des informations relatives aux serveurs 24 et 26. Le serveur de gestion de communications 30 gère les communications selon un protocole de communications permettant la mobilité de certains terminaux par l'attribution à chacun de ceux-ci d'une adresse principale invariable quel que soit son point de connexion au réseau Internet 10 et d'une adresse temporaire localisant à chaque instant de la communication son point de connexion au réseau. Le protocole de communication est par exemple le protocole « Mobile IPv6 », ou tout autre protocole de communications analogue connu.

Dans la suite, on considèrera que le protocole de communications utilisé est le protocole « Mobile IPv6 ». Selon ce protocole, lorsque l'un des deux terminaux change de point de connexion au réseau 10, en cours de communication, il prévient l'autre terminal de son déplacement, en lui transmettant l'adresse du nouveau point de connexion dans un message appelé message BU (de l'anglais « Binding Update »). En réponse, l'autre terminal renvoie un message appelé message BA (de l'anglais « Binding Acknowledge »).

En outre, selon ce protocole, le terminal mobile 18 est identifié par une adresse principale invariable quel que soit son point de connexion au réseau Internet 10, et localisé par une adresse temporaire qui dépend de son point de connexion. Ainsi, lorsque le terminal mobile 18 est dans une première position P₁, accédant au réseau 10 par l'intermédiaire d'un premier point de connexion 16, le système lui fournit une première adresse temporaire, et lorsque le terminal mobile 18 change de position, par exemple en cours de communication, pour se retrouver dans une position P₂, à partir de laquelle il accède au réseau 10 par l'intermédiaire d'un second point de connexion 16, le système lui affecte une seconde adresse temporaire.

La gestion des adresses principale et temporaire des terminaux mobiles est assurée par des serveurs de gestion de terminaux mobiles dispersés dans le réseau 10, non représentés.

De même que le terminal mobile 18, les moyens 22 de fourniture du service sont identifiés de façon unique par une adresse principale et localisés par une adresse temporaire, déterminée par le serveur de gestion de communications 30 et correspondant à l'adresse principale du serveur 24, 26 le mieux adapté pour fournir le service au terminal mobile 18.

Le serveur de sélection 30 remplit en outre une fonction de serveur de gestion de terminaux mobiles classique. Il intercepte tous les messages en direction de l'adresse principale des moyens 22 de fourniture du service et transmet ces messages vers l'adresse temporaire sélectionnée de ces moyens 22 de fourniture de service, c'est-à-dire vers le serveur sélectionné pour fournir le service.

Ainsi, tout se passe comme si les moyens 22 de fourniture du service étaient mobiles et comme si, à chaque instant d'une communication, ils étaient localisés à la place de l'un des serveurs 24 ou 26.

La base de données 32 conserve en mémoire des informations permettant au serveur de gestion de communications 30 de sélectionner le serveur 24 ou 26 le mieux adapté pour fournir le service. Par exemple, le critère de sélection retenu est un critère de proximité du terminal mobile 18. Dans ce cas, lors de l'établissement d'une communication ou en cours de communication, le serveur de gestion de communications 30 sélectionne le serveur 24 ou 26 le plus proche du terminal mobile 18 pour améliorer la qualité du service.

Pour ce faire, la base de données 32 comporte un certain nombre d'enregistrements. Chaque enregistrement comporte trois champs. Un premier champ comporte l'adresse principale des moyens 22 de fourniture du service, un deuxième champ comporte des informations de localisation d'un point de connexion au réseau 10 ou d'un sous-réseau du réseau 10, et un troisième champ comporte l'adresse principale de l'un des serveurs 24, 26 adaptés pour fournir le service.

Un tel enregistrement s'interprète de la façon suivante : lorsqu'un terminal d'accès, tel que le terminal mobile 18 souhaite accéder au service proposé par les moyens 22 identifiés dans le premier champ, à partir d'un point de connexion ou d'un sous-réseau dont la localisation correspond au deuxième champ, le serveur de gestion de communications 30 doit le mettre en relation avec le serveur identifié par le troisième champ.

Le critère de sélection pourrait également être un critère d'encombrement des serveurs adaptés pour fournir le service. Dans ce cas les enregistrements pourraient comporter des informations relatives à l'encombrement de chacun des serveurs adaptés à fournir le service, ces informations étant mises à jour régulièrement par le serveur de gestion de communications 30.

Cependant, dans la suite de la description, nous nous limiterons à un critère de sélection géographique.

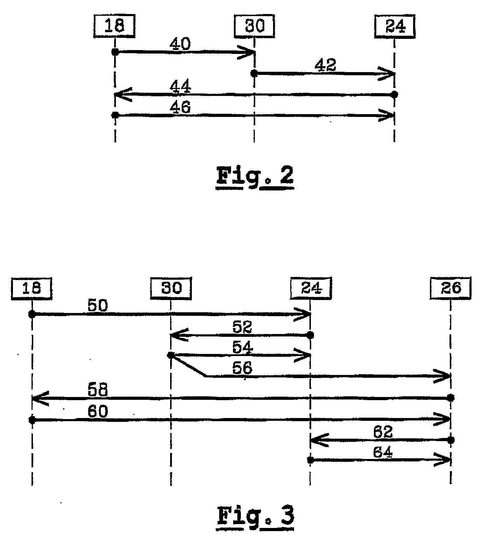

Le fonctionnement du système décrit précédemment va maintenant être décrit en référence aux figures 2 et 3.

La figure 2 représente le procédé mis en oeuvre par le système décrit précédemment lors de l'établissement d'une communication entre le terminal mobile 18 et les moyens 22 de fourniture du service.

Lors d'une première étape 40, pendant laquelle un utilisateur du téléphone mobile 18 souhaite accéder au service, le téléphone mobile transmet, depuis sa position P₁, une requête en direction de l'adresse principale des moyens 22 de fourniture du service. Cette requête est donc interceptée par le serveur de gestion de communications 30.

Lors de l'étape 42 suivante, le serveur de gestion de communications 30 détermine la localisation du terminal mobile 18. Il compare cette information de localisation avec les deuxièmes champs de chaque enregistrement stocké dans la base de données 32 et renvoie l'adresse du serveur le plus proche, par exemple le serveur 24. Le serveur de gestion de communications 30 redirige ensuite la requête vers le serveur 24.

Ensuite, lors d'une étape 44, dès que le serveur 24 a reçu la requête du terminal mobile 18, il lui transmet un message BU pour lui indiquer qu'il se trouve à l'adresse temporaire définie par son adresse principale.

Enfin, lors d'une dernière étape 46, le terminal mobile 18 renvoie un accusé de réception sous forme d'un message BA pour indiquer aux moyens 22 de fourniture du service qu'il a pris connaissance de leur nouvelle position.

Lors du déplacement du terminal mobile 18 de la première position P₁ vers une seconde position P₂ en cours de communication, le procédé de gestion d'une communication représenté à la figure 3 comporte une première étape 50 lors de laquelle le serveur 24 reçoit un message du terminal mobile 18 et détecte dans ce message que le terminal mobile 18 s'est déplacé.

Lors de l'étape suivante 52, le serveur 24 transmet les informations concernant la nouvelle position du terminal mobile 18 au serveur de gestion de communications 30. Celui-ci compare cette nouvelle localisation avec les enregistrements stockés dans la base de données 32, comme précédemment. Il sélectionne ensuite le serveur le plus proche.

Si le serveur sélectionné est le même que le serveur précédent, c'est-à-dire le serveur 24, on passe à une étape 54, lors de laquelle le serveur de gestion de communications 30 informe le serveur 24 qu'il reste le serveur le mieux adapté pour fournir le service au client. La communication peut donc continuer.

Si le serveur sélectionné est différent du serveur 24 précédent, par exemple le serveur 26, on passe à une étape 56. Lors de cette étape 56, le serveur de gestion de communications 30 envoie un message au nouveau serveur sélectionné 26, contenant l'adresse principale du terminal mobile 18.

Lors de l'étape 58 suivante, le nouveau serveur sélectionné 26 envoie au terminal mobile 18 un message BU pour informer ce dernier que les moyens 22 de fourniture du service 22 se sont déplacés et que leur adresse temporaire est désormais l'adresse principale du nouveau serveur 26.

Lors de l'étape 60 suivante, le terminal mobile 18 accuse réception de cette modification en renvoyant un message BA aux moyens 22 de fourniture du service.

Ensuite, lors d'une étape de validation 62, le nouveau serveur 26 avertit l'ancien serveur 24 que le terminal mobile 18 a bien enregistré le déplacement des moyens de fourniture de service 22.

En réponse, lors d'une dernière étape 64, l'ancien serveur 24 transmet au nouveau serveur 26 la liste de toutes les tâches en attente d'être traitées pour le terminal mobile 18, ainsi que les informations nécessaires à la reprise de l'exécution du service par le nouveau serveur 26. Puis il arrête l'exécution du service. C'est désormais le nouveau serveur 26 qui poursuit l'exécution du service demandé par l'utilisateur.

Tout se passe donc, du point de vue du terminal mobile 18 de l'utilisateur, comme si les moyens 22 de fourniture du service étaient constitués d'un serveur mobile se déplaçant en fonction du déplacement du terminal mobile 18, pour fournir un service optimal.

Notamment, le changement de serveur en cours de communication est considéré, du point de vue des serveurs de gestion de terminaux mobiles et du réseau 10, comme un déplacement d'un terminal mobile. Par conséquent, l'intégrité et la sécurité des informations échangées lors de cette communication sont assurées par tout protocole connu de communications permettant la mobilité des terminaux, tel que le protocole Mobile IPv6.

Il apparaît clairement qu'un procédé de gestion d'une communication tel que décrit précédemment permet l'accès à un service fourni par une multiplicité de serveurs sans passer par l'intermédiaire d'un traducteur d'adresses et donc sans nuire à l'intégrité et à la sécurité des informations échangées.

## Revendications

1. Procédé de gestion d'une communication, à travers un réseau de télécommunications (10) comportant des points de connexion (16,20), entre un terminal d'accès (18) connecté au réseau (10) et des moyens (22) de fourniture d'un service à travers le réseau, ces moyens comportant :
- d'une part, une multiplicité de terminaux (24, 26) connectés au réseau, ces terminaux formant serveurs adaptés pour fournir le service, et
- d'autre part, un serveur (30) de gestion de communications apte à sélectionner, parmi ladite multiplicité de serveurs (24,26), le serveur le mieux adapté pour fournir le service au terminal d'accès (18),
la communication étant établie selon un protocole de communications permettant la mobilité de certains terminaux par l'attribution à chacun de ceux-ci d'une adresse principale invariable quel que soit son point de connexion au réseau et par la transmission de toutes données émises à destination de cette adresse principale vers le terminal correspondant, le procédé étant **caractérisé en ce qu'**il comprend une étape d'attribution aux moyens (22) de fourniture du service d'une adresse principale invariable commune, et des étapes, mises en oeuvre par le serveur de gestion de communications (30), d'interception de toutes données émises à destination de ladite adresse principale commune et de redirection de ces données vers le serveur (24,26) sélectionné comme étant le mieux adapté pour fournir ledit service.

2. Procédé de gestion d'une communication selon la revendication 1, comprenant une étape d'attribution à chaque terminal mobile, selon le protocole de communications, d'une adresse temporaire localisant à chaque instant son point de connexion au réseau, **caractérisé en ce qu'**il comprend également une étape d'attribution aux moyens (22) de fourniture du service d'une adresse temporaire correspondant à chaque instant à l'adresse principale du serveur (24, 26) sélectionné comme étant le mieux adapté pour fournir ledit service, lors de la communication.

3. Procédé de gestion d'une communication selon la revendication 2, **caractérisé en ce que**, suite à l'étape de redirection de données vers le serveur (24, 26) sélectionné, le procédé comprend une étape de transmission depuis le serveur (24, 26) sélectionné vers le terminal d'accès (18) d'un message pour lui indiquer que l'adresse temporaire des moyens (22) de fourniture du service est l'adresse principale du serveur (24, 26) sélectionné.

4. Procédé de gestion d'une communication selon l'une quelconque des revendications 1 à 3, **caractérisé en ce que**, lorsque, au cours d'une communication avec un terminal d'accès (18), le serveur de gestion de communication (30) met en oeuvre une étape de sélection d'un nouveau serveur (26), différent d'un serveur (24) sélectionné précédemment au cours de la même communication, le procédé comprend également :
- une étape de transmission de l'adresse principale du terminal d'accès (18) depuis le serveur de gestion de communications (30) vers le serveur nouvellement sélectionné (26),
- une étape de transmission d'un message depuis le serveur nouvellement sélectionné (26) vers le terminal d'accès (18), pour indiquer au terminal d'accès (18) que l'adresse temporaire des moyens (22) de fourniture du service est l'adresse principale du serveur nouvellement sélectionné (26).

5. Procédé de gestion d'une communication selon la revendication 4, **caractérisé en ce qu'**il comprend :
- une étape de transmission, depuis le serveur précédemment sélectionné (24) vers le serveur nouvellement sélectionné (26), des informations nécessaires à la reprise par le serveur nouvellement sélectionné (26) de l'exécution du service demandé par l'utilisateur du terminal d'accès (18),
- une étape d'interruption de ladite exécution, par le serveur précédemment sélectionné (24),
- une étape de poursuite de ladite exécution, par le serveur nouvellement sélectionné (26).

6. Procédé de gestion d'une communication selon la revendication 1 à 5, **caractérisé en ce que** l'étape de sélection, par le serveur de gestion de communications (30), du serveur le mieux adapté pour fournir ledit service est déclenchée dès que le serveur de gestion de communications (30) est sollicité par un événement déclenchant.

7. Procédé de gestion d'une communication selon la revendication 6, **caractérisé en ce que** l'établissement de la communication entre le terminal d'accès (18) et les moyens (22) de fourniture du service est un événement déclenchant.

8. Procédé de gestion d'une communication selon la revendication 6 ou 7 **caractérisé en ce que** le terminal d'accès (18) est un terminal d'accès mobile, et **en ce que** le déplacement du terminal d'accès mobile d'un premier point (P₁) de connexion à un second point (P₂) de connexion du réseau de télécommunications (10) pendant la communication est un événement déclenchant.

9. Procédé de gestion d'une communication selon l'une quelconque des revendications 1 à 8, **caractérisé en ce que** le serveur (24,26) le mieux adapté pour fournir ledit service est le serveur le plus proche du terminal d'accès (18).

10. Procédé de gestion d'une communication selon une combinaison des revendications 8 et 9, **caractérisé en ce que**, lorsque, au cours d'une communication avec un terminal d'accès (18), le serveur (24, 26) sélectionné détecte que le terminal d'accès mobile (18) s'est déplacé d'un point de connexion à un autre, le procédé comprend une étape de transmission depuis le serveur (24, 26) sélectionné vers le serveur de gestion de communications (30) d'informations sur la nouvelle position du terminal d'accès mobile (18).

11. Serveur de gestion de communications (30) d'un réseau de télécommunications (10) comportant des points de connexion (16,20), entre un terminal d'accès (18) connecté au réseau (10) et des moyens (22) de fourniture d'un service à travers le réseau, le serveur étant apte à sélectionner, parmi une multiplicité de serveurs (24,26), le serveur le mieux adapté pour fournir le service au terminal d'accès (18), **caractérisé en ce que** le serveur de gestion de communications (30) possède une adresse principale invariable commune avec les serveurs (24, 26) de la multiplicité de serveurs, le serveur de gestion de communications (30) comportant en outre des moyens d'interception de toutes données émises à destination de l'adresse principale commune et des moyens de redirection desdites données vers le serveur (24,26) sélectionné comme étant le mieux adapté pour fournir ledit service.

## Patentansprüche

1. Verfahren zum Steuern der Kommunikation über ein Telekommunikationsnetz (10), das zwischen einem Zugangsendgerät (18), das mit dem Netz (10) verbunden ist, und Mitteln (22) zum Liefern eines Dienstes über das Netz Verbindungspunkte (16, 20) aufweist, wobei diese Mittel Folgendes umfassen:
- einerseits mehrere Endgeräte (24, 26), die mit dem Netz verbunden sind, wobei diese Endgeräte Server bilden, die dafür ausgelegt sind, den Dienst zu liefern, und
- andererseits einen Kommunikationssteuerungsserver (30), der dafür ausgelegt ist, unter den mehreren Servern (24, 26) denjenigen Server auszuwählen, der am besten für die Lieferung des Dienstes an das Zugangsendgerät (18) geeignet ist,
wobei die Kommunikation gemäß einem Kommunikationsprotokoll aufgebaut wird, das die Mobilität bestimmter Endgeräte ermöglicht, indem zu jedem von ihnen eine unveränderliche Hauptadresse unabhängig von seinem Verbindungspunkt mit dem Netz hinzugefügt wird und sämtliche Daten, die zu dieser Hauptadresse geschickt werden sollen, an das entsprechende Endgerät übertragen werden, wobei das Verfahren **dadurch gekennzeichnet ist, dass** es einen Schritt umfasst, in dem zu den Mitteln (22) zum Liefern des Dienstes eine gemeinsame unveränderliche Hauptadresse hinzugefügt wird, und Schritte umfasst, die von dem Kommunikationssteuerungsserver (30) ausgeführt werden, in denen sämtliche Daten, die zu der gemeinsamen Hauptadresse geschickt werden, abgefangen werden und diese Daten zu demjenigen Server (24, 26) umgelenkt werden, der als der am besten für die Lieferung des Dienstes geeignete Server ausgewählt worden ist.

2. Kommunikationssteuerverfahren nach Anspruch 1, das einen Schritt umfasst, in dem zu jedem mobilen Endgerät gemäß dem Kommunikationsprotokoll eine temporäre Adresse hinzugefügt wird, die zu jedem Zeitpunkt seinen Verbindungspunkt mit dem Netz lokalisiert, **dadurch gekennzeichnet, dass** es außerdem einen Schritt umfasst, in dem in der Kommunikation zu den Mitteln (22) zum Liefern des Dienstes eine temporäre Adresse hinzugefügt wird, die zu jedem Zeitpunkt der Hauptadresse desjenigen Servers (24, 26) entspricht, der als der für die Lieferung des Dienstes am besten geeignete Server ausgewählt worden ist.

3. Kommunikationssteuerverfahren nach Anspruch 2, **dadurch gekennzeichnet, dass** das Verfahren nach dem Schritt des Umlenkens von Daten zu dem ausgewählten Server (24, 26) einen Schritt des Sendens einer Nachricht von dem ausgewählten Server (24, 26) zu dem Zugangsendgerät (18) umfasst, um diesem anzugeben, dass die temporäre Adresse der Mittel (22) zum Liefern des Dienstes die Hauptadresse des ausgewählten Servers (24, 26) ist.

4. Kommunikationssteuerverfahren nach einem der Ansprüche 1 bis 3, **dadurch gekennzeichnet, dass** dann, wenn während einer Kommunikation mit einem Zugangsendgerät (18) der Kommunikationssteuerungsserver (30) einen Schritt des Auswählens eines neuen Servers (26), der von dem während derselben Kommunikation vorher ausgewählten Server (24) verschieden ist, ausführt, das Verfahren außerdem Folgendes umfasst:
- einen Schritt des Sendens der Hauptadresse des Zugangsendgeräts (18) von dem Kommunikationssteuerungsserver (30) zu dem neu ausgewählten Server (26),
- einen Schritt des Sendens einer Nachricht von dem neu ausgewählten Server (26) zu dem Zugangsendgerät (18), um dem Zugangsendgerät (18) anzugeben, dass die temporäre Adresse der Mittel (22) zum Liefern des Dienstes die Hauptadresse des neu ausgewählten Servers (26) ist.

5. Kommunikationssteuerverfahren nach Anspruch 4, **dadurch gekennzeichnet, dass** es Folgendes umfasst:
- einen Schritt des Sendens von dem vorher gewählten Server (24) zu dem neu gewählten Server (26) von Informationen, die erforderlich sind, damit der neu gewählte Server (26) die Abarbeitung des von dem Anwender des Zugangsendgeräts (18) angeforderten Dienstes wieder aufnehmen kann,
- einen Schritt des Unterbrechens der Abarbeitung durch den vorher gewählten Server (24),
- einen Schritt des Fortsetzens der Abarbeitung durch den neu gewählten Server (26).

6. Kommunikationssteuerverfahren nach Anspruch 1 bis 5, **dadurch gekennzeichnet, dass** der Schritt des Auswählens des am besten für die Lieferung des Dienstes geeigneten Servers durch den Kommunikationssteuerungsserver (30) ausgelöst wird, sobald der Kommunikationssteuerungsserver (30) durch ein auslösendes Ereignis dazu gezwungen wird.

7. Kommunikationssteuerverfahren nach Anspruch 6, **dadurch gekennzeichnet, dass** das Aufbauen der Kommunikation zwischen dem Zugangsendgerät (18) und den Mitteln (22) zum Liefern des Dienstes ein auslösendes Ereignis ist.

8. Kommunikationssteuerverfahren nach Anspruch 6 oder 7, **dadurch gekennzeichnet, dass** das Zugangsendgerät (18) ein mobiles Zugangsendgerät ist und dass die Verlagerung des mobilen Zugangs Zugangsendgeräts von einem ersten Verbindungspunkt (P₁) zu einem zweiten Verbindungspunkt (P₂) des Telekommunikationsnetzes (10) während der Kommunikation ein auslösende Ereignis ist.

9. Kommunikationssteuerverfahren nach einem der Ansprüche 1 bis 8, **dadurch gekennzeichnet, dass** der am besten für die Lieferung des Dienstes geeignete Server (24, 26) jener Server ist, der sich am nächsten bei dem Zugangsendgerät (18) befindet.

10. Kommunikationssteuerverfahren gemäß einer Kombination der Ansprüche 8 und 9, **dadurch gekennzeichnet, dass** dann, wenn während einer Kommunikation mit dem Zugangsendgerät (18) der ausgewählte Server (24, 26) detektiert, dass sich das mobile Zugangsendgerät (18) von einem Verbindungspunkt zu einem anderen verlagert, das Verfahren einen Schritt umfasst, in dem Informationen über die neue Position des mobilen Zugangsendgeräts (18) von dem ausgewählten Server (24, 26) zu dem Kommunikationssteuerungsserver (30) gesendet werden.

11. Kommunikationssteuerungsserver (30) eines Telekommunikationsnetzes (10), das zwischen einem mit dem Netz (10) verbundenen Zugangsendgerät (18) und Mitteln (22) zum Liefern eines Dienstes über das Netz Verbindungspunkte (16, 20) aufweist, wobei der Server dafür ausgelegt ist, unter mehreren Servern (24, 26) jenen Server auszuwählen, der am besten für die Lieferung des Dienstes an das Zugangsendgerät (18) geeignet ist, **dadurch gekennzeichnet, dass** der Kommunikationssteuerungsserver (30) eine unveränderliche Hauptadresse besitzt, die den Servern (24, 26) der mehreren Server gemeinsam ist, wobei der Kommunikationssteuerungsserver (30) außerdem Mittel zum Abfangen aller Daten, die zu der gemeinsamen Hauptadresse geschickt werden, und Mittel zum Umlenken der Daten zu dem Server (24, 26), der als der für die Lieferung des Dienstes am besten geeignete Server gewählt worden ist, umfasst.

## Claims

1. Method of managing a communication, through a telecommunications network (10) comprising points of connection (16, 20) between an access terminal (18) connected to the network (10) and means (22) for providing a service through the network, these means comprising:
- on the one hand, a multiplicity of terminals (24, 26) connected to the network, these terminals forming servers suitable for providing the service, and
- on the other hand, a server (30) for managing communications able to select, from among said multiplicity of servers (24, 26), the server best suited for providing the service to the access terminal (18),
the communication being established according to a communications protocol allowing the mobility of certain terminals by allocating to each of them an invariable main address regardless of its point of connection to the network and by the transmitting of all data sent destined for this main address to the corresponding terminal, the method being **characterized in that** it comprises a step of allocating to the means (22) for providing the service a common invariable main address, and steps, implemented by the communications management server (30), of intercepting all data sent destined for said common main address and of redirecting this data to the server (24, 26) selected as being the most suitable for providing said service.

2. Method of managing a communication according to Claim 1, comprising a step of allocating to each mobile terminal, according to the communications protocol, a temporary address locating at each instant its point of connection to the network, **characterized in that** it also comprises a step of allocating to the means (22) for providing the service a temporary address corresponding at each instant to the main address of the server (24, 26) selected as being the most suitable for providing said service, during the communication.

3. Method of managing a communication according to Claim 2, **characterized in that**, following the step of redirecting data to the server (24, 26) selected, the method comprises a step of transmitting from the server (24, 26) selected to the access terminal (18) a message so as to indicate thereto that the temporary address of the means (22) for providing the service is the main address of the server (24, 26) selected.

4. Method of managing a communication according to any one of Claims 1 to 3, **characterized in that**, when, in the course of a communication with an access terminal (18), the communication management server (30) implements a step of selecting a new server (26), different from a server (24) selected previously in the course of the same communication, the method also comprises:
- a step of transmitting the main address of the access terminal (18) from the communications management server (30) to the newly selected server (26),
- a step of transmitting a message from the newly selected server (26) to the access terminal (18), so as to indicate to the access terminal (18) that the temporary address of the means (22) for providing the service is the main address of the newly selected server (26).

5. Method of managing a communication according to Claim 4, **characterized in that** it comprises:
- a step of transmitting, from the previously selected server (24) to the newly selected server (26), information necessary for the resumption by the newly selected server (26) of the execution of the service requested by the user of the access terminal (18),
- a step of interrupting said execution by the previously selected server (24),
- a step of continuing said execution, by the newly selected server (26).

6. Method of managing a communication according to Claims 1 to 5, **characterized in that** the step of selecting, by the communications management server (30), the server most suitable for providing said service is triggered as soon as the communications management server (30) is invoked by a triggering event.

7. Method of managing a communication according to Claim 6, **characterized in that** the establishment of the communication between the access terminal (18) and the means (22) for providing the service is a triggering event.

8. Method of managing a communication according to Claim 6 or 7, **characterized in that** the access terminal (18) is a mobile access terminal, and **in that** the displacement of the mobile access terminal from a first point (P₁) of connection to a second point (P₂) of connection of the telecommunications network (10) during the communication is a triggering event.

9. Method of managing a communication according to any one of Claims 1 to 8, **characterized in that** the server (24, 26) most suitable for providing said service is the server closest to the access terminal (18).

10. Method of managing a communication according to a combination of Claims 8 and 9, **characterized in that**, when, in the course of a communication with an access terminal (18), the server (24, 26) selected detects that the mobile access terminal (18) has moved from one point of connection to another, the method comprises a step of transmitting from the server (24, 26) selected to the communications management server (30) information about the new position of the mobile access terminal (18).

11. Server for managing communications (30) of a telecommunications network (10) comprising points of connection (16, 20), between an access terminal (18) connected to the network (10) and means (22) for providing a service through the network, the server being able to select, from among a multiplicity of servers (24, 26), the server most suitable for providing the service to the access terminal (18), **characterized in that** the communications management server (30) possesses a common invariable main address shared with the servers (24, 26) of the multiplicity of servers, the communications management server (30) comprising furthermore means for intercepting all data sent destined for the common main address and means for redirecting said data to the server (24, 26) selected as being the most suitable for providing said service.
